(19) Europäisches Patentamt
European Patent Office
Office européen des brevets

(11) Veröffentlichungsnummer: 0 439 778 A2

(12) EUROPÄISCHE PATENTANMELDUNG

(21) Anmeldenummer: 90124496.2

(22) Anmeldetag: 18.12.90

(51) Int. Cl.5: C08G 77/14, C08G 77/38, C08G 77/10, C08L 83/06, C09D 183/06

(30) Priorität: 01.02.90 DE 4002879

(43) Veröffentlichungstag der Anmeldung: 07.08.91 Patentblatt 91/32

(84) Benannte Vertragsstaaten: AT BE CH DE ES FR GB IT LI NL SE

(71) Anmelder: WACKER-CHEMIE GMBH
Prinzregentenstrasse 22
W-8000 München 22(DE)

(72) Erfinder: Herzig, Christian, Dr. Dipl.-Chem.
Schrockenbauer 1
W-8221 Taching(DE)

# (54) Alkenylgruppen aufweisende Siloxancopolymere, deren Herstellung und Verwendung.

(57)

Beschrieben werden neue Alkenylgruppen aufweisende Siloxancopolymere enthaltend
(a) Siloxaneinheiten der Formel

$$R_aSi(OR^1)_bO_{\frac{4-(a+b)}{2}} \quad (I),$$

(b) je Molekül mindestens eine Siloxaneinheit der Formel und gegebenenfalls

$$GR_cSiO_{\frac{4-(c+1)}{2}} \quad (II)$$

(c) je Molekül mindestens eine Einheit ausgewählt aus der Gruppe von Einheiten der Formel

EP 0 439 778 A2

$$O_{\frac{4-(c+1)}{2}}R_cSi-G^1-SiR_cO_{\frac{4-(c+1)}{2}} \qquad (III),$$

$$O_{\frac{4-(c+1)}{2}}R_cSi-\underset{\begin{array}{c}|\\ SiR_cO_{\frac{4-(c+1)}{2}}\end{array}}{G^2}-SiR_cO_{\frac{4-(c+1)}{2}} \qquad (IV), \text{ und}$$

$$O_{\frac{4-(c+1)}{2}}R_c\ Si-\overset{\begin{array}{c}SiR_cO_{\frac{4-(c+1)}{2}}\\ |\end{array}}{\underset{\begin{array}{c}|\\ SiR_cO_{\frac{4-(c+1)}{2}}\end{array}}{G^3}}-SiR_cO_{\frac{4-(c+1)}{2}} \qquad (V),$$

wobei R, $R^1$, G, $G^1$, $G^2$, $G^3$, a, b und c die im Anspruch 1 dafür angegebene Bedeutung haben.

# ALKENYLGRUPPEN AUFWEISENDE SILOXANCOPOLYMERE DEREN HERSTELLUNG UND VERWENDUNG

Die Erfindung betrifft Alkenylgruppen aufweisende Siloxancopolymere sowie ein Verfahren zu deren Herstellung. Weiterhin betrifft die Erfindung Zusammensetzungen, die Alkenylgruppen aufweisendes Siloxancopolymer, Si-gebundene Wasserstoffatome aufweisendes Organopolysiloxan und Katalysator enthalten, sowie die Verwendung der Zusammensetzungen zur Herstellung von klebrige Stoffe abweisenden Überzügen.

Es ist bekannt, Si-gebundene Vinylgruppen aufweisende Organopolysiloxane mit Si-gebundenen Wasserstoffatomen aufweisenden Organopolysiloxanen in Gegenwart von Katalysatoren umzusetzen. Derartige Organopolysiloxane mit Si-gebundenen Vinylgruppen sind jedoch nicht leicht zugänglich, da sie aus den nur schwierig herstellbaren Halogenvinylsilanen durch Hydrolyse hergestellt werden müssen.

Leichter zugänglich sind die in US-A 4 311 821 (ausgegeben 19. Januar 1982, C. Weitemeyer et al., Th. Goldschmidt AG) beschriebenen Organopolysiloxane mit Trimethylolethandiallylether-, Trimethylolpropandiallylether- oder Pentaerythrittriallylethergruppen. Die Verknüpfung des Trimethylolethandiallylethers, des Trimethylolpropandiallylethers oder Pentaerythrittriallylethers wird durch Reaktion der Hydroxylgruppe mit einer Si-gebundenen Halogen- oder Si-gebundenen Alkoxygruppe eines Organopolysiloxans erreicht. Nachteilig ist, daß die so erhaltene SiOC-Verknüpfung relativ hydrolyseinstabil ist im Vergleich zu einer SiC-Verknüpfung.

In US-A 4 208 319 (ausgegeben 18. Juni 1980, P. August et al., Wacker-Chemie GmbH) ist die Umsetzung von vier aliphatische Doppelbindungen enthaltende organische Verbindung, wie z. B. Tetraallyloxyethan, mit einem Silan mit Si-gebundenem Wasserstoff in Gegenwart von die Anlagerung von Si-gebundenem Wasserstoffatom an aliphatische Doppelbindung förderndem Katalysator beschrieben. Bei dieser Umsetzung werden praktisch 100 % d. Th. betragende Ausbeuten an 3 aliphatische Doppelbindungen enthaltendem Organosilan erhalten. Die so erhaltenen Organosilane werden als Verstärkungsadditive in durch Schwefel oder Radikale vernetzbare Massen auf Grundlage von organischen Polymeren und Füllstoffen verwendet.

Es bestand die Aufgabe, Alkenylgruppen aufweisende Siloxancopolymere bereitzustellen, die in einem einfachen Verfahren herstellbar sind, wobei das Verfahren es erlaubt, an einem Si-atom mehr als eine Alkenylgruppe einzuführen, die hydrolysestabil sind und die mit Si-gebundenen Wasserstoffatomen aufweisenden Organopolysiloxanen in Gegenwart von die Anlagerung von Si-gebundenem Wasserstoff an aliphatische Doppelbindung förderndem Katalysator rasch vernetzen. Die Aufgabe wird durch die Erfindung gelöst.

Gegenstand der Erfindung sind

Alkenylgruppen aufweisende Siloxancopolymere enthaltend

(a) Siloxaneinheiten der Formel

$$R_aSi(OR^1)_bO_{\frac{4-(a+b)}{2}} \qquad (I),$$

wobei R gleiche oder verschiedene, gegebenfalls halogenierte Kohlenwasserstoffreste mit 1 bis 18 Kohlenstoffatom(en) je Rest,

$R^1$ gleiche oder verschiedene Alkylreste mit 1 bis 4 Kohlenstoffatom(en) je Rest, die durch ein Ethersauerstoffatom substituiert sein können, bedeutet,

a 0, 1, 2 oder 3,

b 0, 1, 2 oder 3

und die Summe a + b nicht größer als 3 ist,

(b) je Molekül mindestens eine Siloxaneinheit der Formel

$$GR_cSiO_{\frac{4-(c+1)}{2}} \qquad (II),$$

wobei R die oben dafür angegebene Bedeutung hat,

c 0, 1 oder 2 ist,
G einen Rest der Formel

$- CH_2CHR^2CHR^2OY(OCHR^2CR^2=CH_2)_{x-1}$

bedeutet,
wobei $R^2$ gleich oder verschieden ist, ein Wasserstoffatom oder einen Methylrest bedeutet,
Y einen dreiwertigen, vierwertigen, fünfwertigen oder sechswertigen Kohlenwasserstoffrest mit 2 bis 20 Kohlenstoffatomen je Rest bedeutet,
der durch Gruppen der Formel

- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)

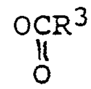

(wobei $R^3$ die oben dafür angegebene Bedeutung hat) oder
- X (wobei X ein Halogenatom bedeutet)

substituiert sein kann
oder durch mindestens ein Sauerstoffatom, Schwefelatom oder eine Carbonylgruppe unterbrochen sein kann,
oder einen dreiwertigen Rest der Formel

$\equiv P$, $\equiv P=O$ oder $\equiv SiR^5$

bedeutet, wobei $R^5$ einen einwertigen Kohlenwasserstoffrest mit 1 bis 8 Kohlenstoffatom(en) je Rest bedeutet,
oder ein vierwertiges Element, wie

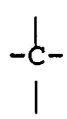 , 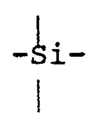 oder 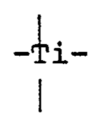

bedeutet und
x 3, 4, 5 oder 6 ist,
und gegebenenfalls
(c) je Molekül mindestens eine Einheit ausgewählt aus der Gruppe von Einheiten der Formel

$$O_{\frac{4-(c+1)}{2}}R_cSi-G^1-SiR_cO_{\frac{4-(c+1)}{2}} \qquad (III),$$

$$O_{\frac{4-(c+1)}{2}}R_cSi-\begin{array}{l}G^2-SiR_cO_{\frac{4-(c+1)}{2}}\\|\\SiR_cO_{\frac{4-(c+1)}{2}}\end{array} \qquad (IV),\ und$$

$$O_{\frac{4-(c+1)}{2}}R_c\ Si-\begin{array}{l}SiR_cO_{\frac{4-(c+1)}{2}}\\|\\G^3-SiR_cO_{\frac{4-(c+1)}{2}}\\|\\SiR_cO_{\frac{4-(c+1)}{2}}\end{array} \qquad (V),$$

wobei R und c die oben dafür angegebene Bedeutung haben,
$G^1$ einen Rest der Formel

$$-CH_2CHR^2CHR^2O-\begin{array}{c}(OCHR^2CR^2=CH_2)_{x-2}\\|\\Y\end{array}-OCHR^2CHR^2CH_2-$$

$G^2$ einen Rest der Formel

$$-CH_2CHR^2CHR^2O-\begin{array}{c}(OCHR^2CR^2=CH_2)_{x-3}\\|\\Y\\|\\OCHR^2CHR^2-CH_2-\end{array}-OCHR^2CHR^2CH_2- \qquad und$$

$G^3$ einen Rest der Formel

$$-CH_2CHR^2CHR^2O-\begin{array}{c}(OCHR^2CR^2=CH_2)_{x-4}\\|\\Y\\|\\(OCHR^2CHR^2CH_2-)_2\end{array}-OCHR^2CHR^2CH_2- \qquad (x-4\geq 0),$$

wobei $R^2$, Y und x die oben dafür angegebene Bedeutung haben, bedeutet.

Vorzugsweise enthalten die Alkenylgruppen aufweisenden Siloxancopolymere Siloxaneinheiten der Formel (I), je Molekül mindestens eine Siloxaneinheit der Formel (II) und je Molekül mindestens eine Einheit

ausgewählt aus der Gruppe der Einheiten der Formel (III), (IV) und (V).

Gegenstand der Erfindung ist weiterhin ein Verfahren zur Herstellung der Alkenylgruppen aufweisenden Siloxancopolymere, dadurch gekennzeichnet, daß
mehr als zwei aliphatische Doppelbindungen aufweisende organische Verbindung (1) der allgemeinen Formel

$Y(OCHR^2CR^2=CH_2)_x$

wobei $R^2$, Y und x die oben dafür angegebene Bedeutung haben,
mit Organopolysiloxan (2) mit mindestens einem Si-gebundenen Wasserstoffatom je Molekül in Gegenwart von die Anlagerung von Si-gebundenem Wasserstoff an aliphatische Doppelbindung förderndem Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Alkenylgruppen aufweisende Siloxancopolymere mit durchschnittlich mehr als zwei Alkenylgruppen der Formel

$-OCHR^2CR^2=CH_2$ ,

wobei $R^2$ die oben dafür angegebene Bedeutung hat, erhalten werden.

Vorzugsweise ist x 3 oder 4 und Y ein dreiwertiger oder vierwertiger Rest.

Die erfindungsgemäßen, Alkenylgruppen aufweisenden Organopolysiloxane besitzen vorzugsweise eine Viskosität von 5 bis $5 \cdot 10^5$ mPa.s bei 25° C, bevorzugt 50 bis 50000 mPa•s bei 25° C.

Beispiele für Reste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Beispiele für Alkylreste $R^1$ sind der Methyl-, Ethyl-, n-Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^1$, die durch ein Ethersauerstoffatom substituiert sind, sind der Methoxyethylen- und Ethoxyethylenrest.

Bevorzugt ist der Rest $R^2$ ein Wasserstoffatom.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest.

Beispiele für Reste $R^5$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste; und Aralkylreste, wie der Benzylrest, der α- und der β-Phenylethylrest.

Bevorzugt als Alkenylgruppen aufweisende Siloxancopolymere sind solche, die

(a) Siloxaneinheiten der Formel

$R_2SiO$ (I')

(b) je Molekül mindestens zwei Siloxaneinheiten der Formel

$GR_2SiO_{1/2}$ (II') und

(c) je Molekül mindestens eine Einheit der Formel

$O_{1/2}R_2SiG^1SiR_2O_{1/2}$ (III'),

wobei R, G und $G^1$ die oben dafür angegebene Bedeutung haben, enthalten.

Beispiele für mehr als zwei aliphatische Doppelbindungen aufweisende organische Verbindung (1), die bei dem erfindungsgemäßen Verfahren eingesetzt wird, sind solche der Formel

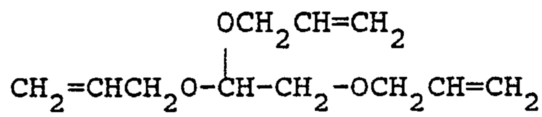

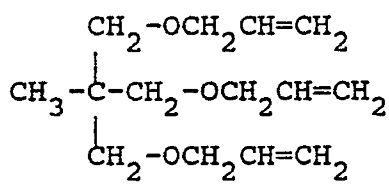

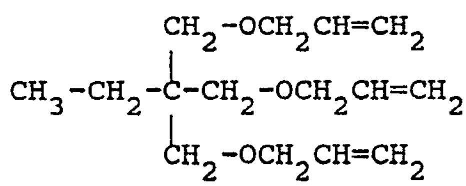

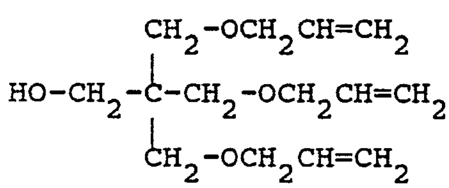

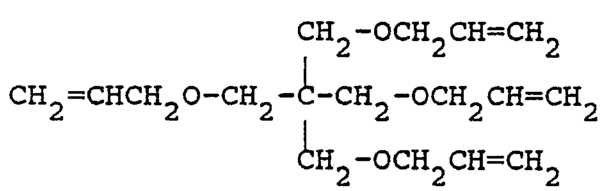

$(CH_2=CHCH_2O)_2CHCH(OCH_2CH=CH_2)_2$
$(CH_2=CHCH_2O)_2CHCH_2CH(OCH_2CH=CH_2)_2$
$CH_3C(OCH_2CH=CH_2)_3$
$C(OCH_2CH=CH_2)_4$
$(CH_2=CHCH_2O)CH_2[CH(OCH_2CH=CH_2)]_3CH_2(OCH_2CH=CH_2)$
$(CH_2=CHCH_2O)CH_2[CH(OCH_2CH=CH_2)]_4CH_2(OCH_2CH=CH_2)$
$Si(OCH_2CH=CH_2)_4$
$Si[OCH(CH_3)CH=CH_2]_4$
$P(OCH_2CH=CH_2)_3$,
$O=P(OCH_2CH=CH_2)_3$ und
$(R^6O\text{-}CH_2\text{-})_{4-k}C(\text{-}CH_2\text{-}OCH_2CH=CH_2)_k$
($R^6$ bedeutet Wasserstoff oder einen Rest der Formel

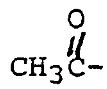

und k ist durchschnittlich 2,5 bis 3,5, bevorzugt 2,9.), wobei die letztgenannte Verbindung und Tetraallyloxyethan bevorzugte Beispiele sind.

Beispiele für den Rest Y sind daher solche der Formel

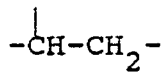

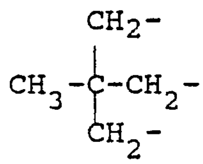

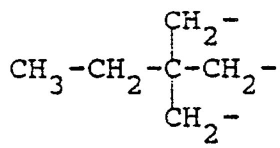

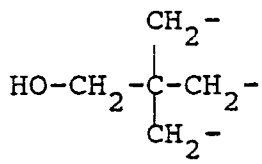

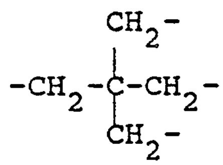

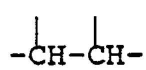

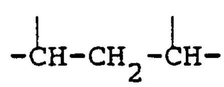

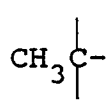

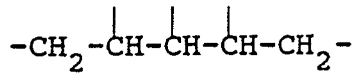

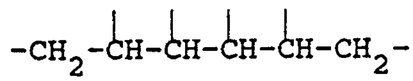

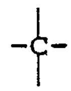

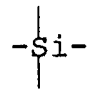

$\equiv P$ und $\equiv P=O$ .

Verfahren zur Herstellung von organischer Verbindung (1) sind in EP-B 46 731 (veröffentlicht 3. Oktober 1984, F. Lohse et al., Ciba-Geigy AG) beschrieben.

Die Verbindung der Formel

$(HOCH_2)_{4-k}C(CH_2OCH_2CH=CH_2)_k$,

wobei k 2,9 ist, ist beispielsweise bei der Fa. Shell AG käuflich erwerblich und wird als Pentaerythrittriallylether vertrieben. Die Verbindung der Formel

$$(CH_3-\underset{\underset{O}{\|}}{C}-O-CH_2)_{4-k}C(CH_2OCH_2CH=CH_2)_k,$$

wobei k durchschnittlich 2,5 bis 3,5, bevorzugt 2,9 ist, wird durch Umsetzung der vorstehend genannten Verbindung mit Acetanhydrid oder Isopropenylacetat gewonnen.

Vorzugsweise werden als Organopolysiloxane (2) mit mindestens einem Si-gebundenen Wasserstoffatom solche der allgemeinen Formel

$$H_eR_fSiO_{\frac{4-(e+f)}{2}} \qquad (VI),$$

wobei R die oben dafür angegebene Bedeutung hat,

e 0 oder 1, durchnittlich 0,005 bis 1,0,

f 0, 1, 2 oder 3, durchschnittlich 1,0 bis 2,0 und

die Summe e + f nicht größer als 3 ist,

bei dem erfindungsgemäßen Verfahren eingesetzt.

Bevorzugt werden als Organopolysiloxane (2) mit mindestens einem Si-gebundenen Wasserstoffatom solche der allgemeinen Formel

$H_dR_{3-d}SiO(SiR_2O)_o(SiRHO)_pSiR_{3-d}H_d$ (VII),

wobei R die oben dafür angegebene Bedeutung hat,

d 0 oder 1,

o 0 oder eine ganze Zahl von 1 bis 1000 und

p  0 oder eine ganze Zahl von 1 bis 6 bedeutet,
bei dem erfindungsgemäßen Verfahren eingesetzt.

Besonders bevorzugt enthalten die bei dem erfindungsgemäßen Verfahren eingesetzten Organopolysiloxane (2) 2 bis 6 Si-gebundene Wasserstoffatome je Molekül.

Die Organopolysiloxane (2) mit mindestens einem Si-gebundenen Wasserstoffatom je Molekül besitzen vorzugsweise eine Viskosität von 0,5 bis 20 000 mPa•s bei 25 °C, bevorzugt 5 bis 1000 mPas•s bei 25 °C.

Bevorzugte Beispiele für Organopolysiloxane der Formel (VII) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten.

Verfahren zum Herstellen von Organopolysiloxanen mit mindestens einem Si-gebundenen Wasserstoffatom je Molekül, auch von solchen der bevorzugten Art, sind allgemein bekannt.

Organische Verbindung (1) wird bei dem erfindungsgemäßen Verfahren in solchen Mengen eingesetzt, daß aliphatische Doppelbindung in organischer Verbindung (1) zu Si-gebundenem Wasserstoff in Organopolysiloxan (2) im Verhältnis von vorzugsweise 1,5 : 1 bis 20 : 1, bevorzugt 2 : 1 bis 10 : 1, vorliegt. Organische Verbindung (1) kann mit Organopolysiloxan (2) in Abhängigkeit ihrer Funktionalität und ihres Molekulargewichtes annähernd beliebig in sehr weiten Grenzen kombiniert werden. Ein Verhältnis C=C : SiH von größer als 20 : 1 führt aber ausschließlich zur Monohydrosilylierung der organischen Verbindung (1), was nicht bevorzugt ist.

Die Umsetzung von organische Verbindung (1), wie Tetraallyloxyethan, mit Organopolysiloxan (2), wie α,ω-Dihydrogendimethylpolysiloxan, in Gegenwart von Katalysator (3) läuft nach folgendem Reaktionsschema ab:

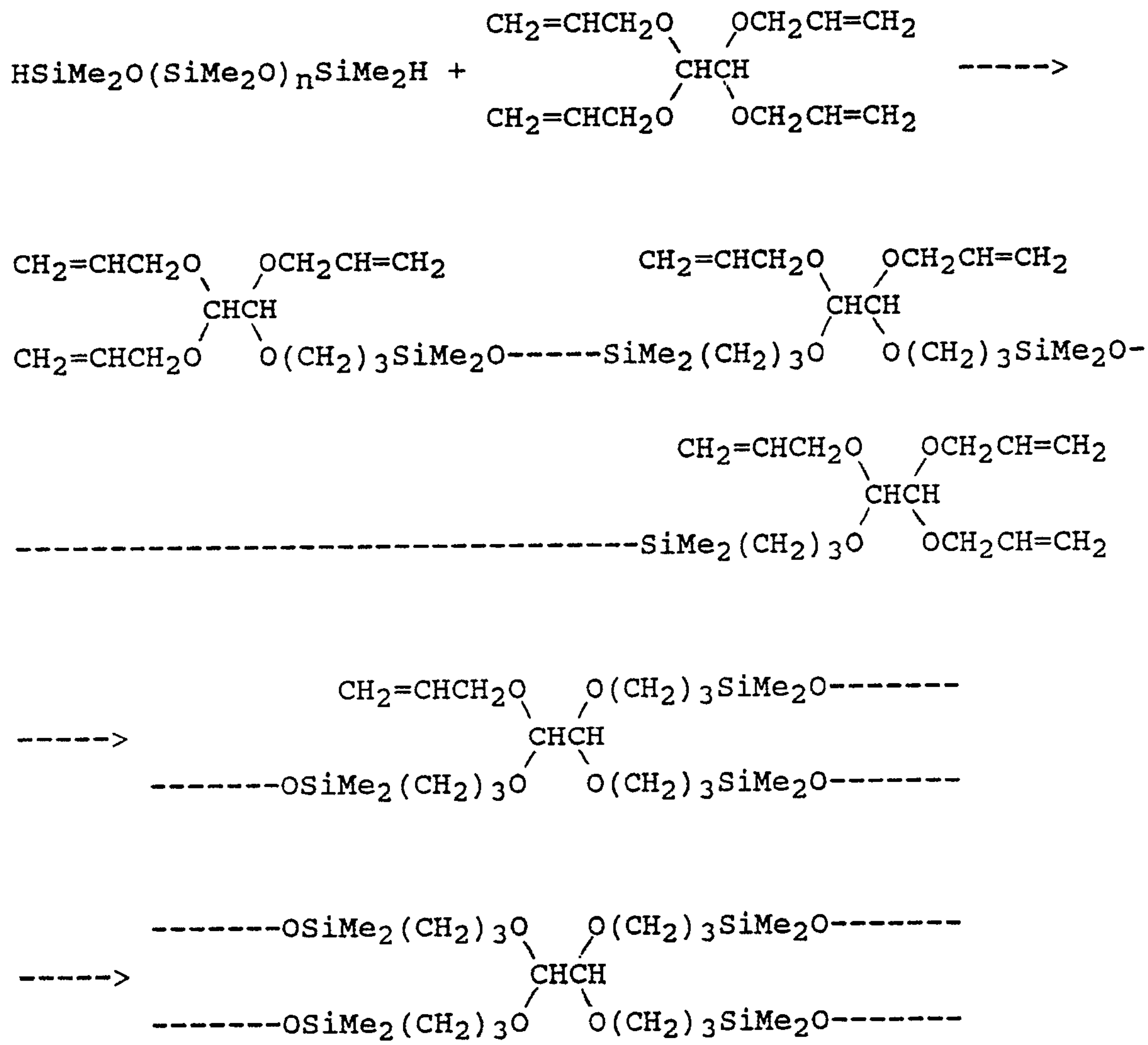

Der Reaktionsablauf und damit das erhaltene Endprodukt hängt entscheidend von dem eingesetzten Verhältnis von C=C-Doppelbindung in organischer Verbindung (1) zu Si-gebundenem Wasserstoff in Organopolysiloxan (2) ab. Es werden je nach eingesetztem Verhältnis C=C : SiH - wobei das Verhältnis C=C : SiH immer größer als 1 sein muß - Siloxancopolymere erhalten, die am Kettenende und entlang der Kette freie Alkenylgruppen der Formel

$-OCHR^2CR^2=CH_2$, wie $-OCH_2CH=CH_2$,

aufweisen, wobei es zu Verzweigungen entlang der Kette kommen kann durch Weiterreaktion der freien Alkenylgruppen entlang der Kette mit den Si-gebundenen Wasserstoffatomen des Organopolysiloxans (2).

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenen Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 1000 Gew.-ppm (Gewichtsteilen je Million Gewichtsteilen), bevorzugt in Mengen von 2 bis 50 Gew.-ppm, jeweils berechnet als elementares Platin und bezogen auf das Gesamtgewicht von organische Verbindung (1) und Organopolysiloxan (2).

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 50 °C bis 150 °C, bevorzugt 80 °C bis 130 °C durchgeführt.

Bei dem erfindungsgemäßen Verfahren können inerte, organische Lösungsmittel mitverwendet werden, obwohl die Mitverwendung von inerten, organischen Lösungsmittel nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Von den nach dem erfindungsgemäßen Verfahren hergestellten Alkenylgruppen aufweisenden Siloxancopolymeren wird vorzugsweise überschüssige organische Verbindung (1) sowie gegebenenfalls mitverwendetes inertes organisches Lösungsmittel destillativ entfernt.

Die nach dem erfindungsgemäßen Verfahren hergestellten Alkenylgruppen aufweisenden Siloxancopolymere werden gegebenenfalls mit Organopolysiloxan (4) äquilibriert.

Als Organopolysiloxane (4) werden vorzugsweise solche ausgewählt aus der Gruppe bestehend aus linearen, endständige Triorganosiloxygruppen aufweisenden Organopolysiloxanen der Formel

$R_3SiO(SiR_2O)_rSiR_3$ ,

wobei R die oben dafür angegebene Bedeutung hat und
r 0 oder eine ganze Zahl im Wert von 1 bis 1500 ist,
linearen, endständige Hydroxylgruppen aufweisenden Organopolysiloxanen der Formel

$HO(SiR_2O)_sH$ ,

wobei R die oben dafür angegebene Bedeutung hat und
s eine ganze Zahl im Wert von 1 bis 1500 ist,
cyclischen Organopolysiloxanen der Formel

$(R_2SiO)t$ ,

wobei R die oben dafür angegebene Bedeutung hat und
t eine ganze Zahl von 3 bis 12 ist,
und Mischpolymerisaten aus Einheiten der Formel

$R_2SiO$ und $RSiO_{3/2}$ ,

wobei R die oben dafür angegebene Bedeutung hat, eingesetzt.

Das Mengenverhältnis des bei der gegebenenfalls durchgeführten Äquilibrierung eingesetzten Organopolysiloxans (4) und Alkenylgruppen aufweisenden Siloxancopolymeren wird lediglich durch den gewünschten Anteil der Alkenylgruppen in den bei der gegebenenfalls durchgeführten Äquilibrierung erzeugten Siloxancopolymeren und durch die gewünschte mittlere Kettenlänge bestimmt.

Bei dem gegebenenfalls durchgeführten Äquilibrieren werden vorzugsweise basische Katalysatoren, welche die Äquilibrierung fördern, eingesetzt. Beispiele für solche Katalysatoren sind Alkalihydroxide, wie Natriumhydroxid und Kaliumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2000 Gew.-ppm, jeweils bezogen auf das Gesamtgewicht von eingesetztem Alkenylgruppen aufweisendem Siloxancopolymer und eingesetztem Organopolysiloxan (4), verwendet. Die Verwendung saurer Äquilibrierungskatalysatoren ist zwar möglich, jedoch nicht bevorzugt.

Die gegebenenfalls durchgeführte Äquilibrierung wird vorzugsweise bei 100 °C bis 150 °C und beim Druck der umgebenden Atmosphäre, also etwa bei 1020 hPa (abs.) durchgeführt. Falls erwünscht, können

aber auch höhere oder niedrigere Drücke angewendet werden. Das Äquilibrieren wird vorzugsweise in 5 bis 20 Gew.-%, bezogen auf das Gesamtgewicht von jeweils eingesetztem Alkenylgruppen aufweisendem Siloxancopolymer und eingesetztem Organopolysiloxan (4), in mit Wasser nichtmischbarem Lösungsmittel, wie Toluol, durchgeführt. Vor dem Aufarbeiten des bei dem Äquilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die erfindungsgemäßen, Alkenylgruppen aufweisenden Siloxancopolymere können wie die Si-gebundene Vinylgruppen aufweisenden Organopolysiloxane mit Si-gebundenem Wasserstoff aufweisenden Organopolysiloxanen in Gegenwart von Hydrosilylierungskatalysatoren vernetzt werden. Weiterhin können die erfindungsgemäßen, Alkenylgruppen aufweisenden Siloxancopolymere auch mit Mercaptogruppen aufweisenden organischen Polymeren vernetzt werden.

Die erfindungsgemäßen Alkenylgruppen aufweisenden Siloxancopolymere werden in Zusammensetzungen, die

(A) Alkenylgruppen aufweisendes Siloxancopolymer vorzugsweise enthaltend Einheiten der Formel (I), (II) und gegebenenfalls mindestens eine der Einheiten der Formel (III), (IV) oder (V), bevorzugt enthaltend Einheiten der Formel (I'), (II') und (III'),

(B) Si-gebundene Wasserstoffatome aufweisendes Organopolysiloxan und

(C) die Anlagerung von Si-gebundenem Wasserstoff an aliphatische Doppelbindung förderndem Katalysator

enthalten, verwendet.

Als Komponente (B) werden vorzugsweise Organopolysiloxane der Formel (VI), bevorzugt solche der Formel

$H_dR_{3-d}SiO(SiR_2O)_o(SiRHO)_qSiR_{3-d}H_d$, (VIII)

wobei R die oben dafür angegebene Bedeutung hat,
d O oder 1
o O oder eine ganze Zahl von 1 bis 1000 und
q O oder eine ganze Zahl von 1 bis 50, vorzugsweise 5 bis 50, bedeutet,
verwendet.

Als Komponente (C) werden vorzugsweise die oben genannten Katalysatoren (3) verwendet.

Weiterhin können die Zusammensetzungen weitere Zusätze, wie (D) die Anlagerung von Si-gebundenem Wasserstoff an aliphatische Doppelbindung bei Raumtemperatur verzögernde Mittel, enthalten. Solche Inhibitoren sind z. B. in US-A 3 933 880 beschrieben. Beispiele hierfür sind acetylenisch ungesättigte Alkohole, wie 3-Methyl-1-butin-3-ol, 1-Ethinylcyclohexan-1-ol, 3,5-Dimethyl-1-hexin-3-ol, 3-Methyl-1-pentin-3-ol und dergleichen mehr.

Die die erfindungsgemäßen Siloxancopolymere enthaltenden Zusammensetzungen werden zur Herstellung von klebrige Stoffe abweisenden Überzügen verwendet.

Vorzugsweise werden die die erfindungsgemäßen Siloxancopolymere enthaltenden Zusammensetzungen durch Ultraviolettlicht, wobei solches mit Wellenlängen im Bereich von 200 bis 400 nm bevorzugt ist und/oder durch Wärme, wobei Temperaturen von 20 °C bis 100 °C bevorzugt sind, vernetzt. Das Ultraviolettlicht kann z. B. in Xenon-, Quecksilbernieder-, Quecksilbermittel- oder Quecksilberhochdrucklampen erzeugt werden. Zur Vernetzung durch Licht ist auch solches mit einer Wellenlänge von 400 bis 600 nm, also sogenanntes "Halogenlicht", geeignet. Die die erfindungsgemäßen Siloxancopolymere enthaltenden Zusammensetzungen können durch Licht im sichtbaren Bereich vernetzt werden, wenn handelsübliche Photosensibilisatoren mitverwendet werden. Energiequellen zur Vernetzung der die erfindungsgemäßen Siloxancopolymere enthaltenden Zusammensetzungen durch Wärme sind Öfen, Heizkanäle, beheizte Walzen, beheizte Platten oder Wärmestrahlen des Infrarot-bereiches.

Beispiele für Oberflächen, auf welche die erfindungsgemäßen Überzüge aufgebracht werden können, sind diejenigen von Papier, Holz, Kork, Kunststoffolien, z. B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der die erfindungsgemäßen Siloxancopolymere enthaltenden Zusammensetzungen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung.

Beispiel 1:

Zu 127 g 1,1,2,2-Tetrallyloxyethan werden 2,7 mg Platin in Form einer Lösung von Platintetrachlorid in 1-Octen zugegeben. Die Mischung wird auf 110 °C erhitzt und unter Stickstoffatmosphäre und Rühren werden zu dieser Mischung bei 110 °C 78 g eines α,ω-Dihydrogendimethylpolysiloxans mit einer Viskosität von 3,7$mm^2 \cdot s^{-1}$ bei 25 °C, das 0,32 Gew.-% Si-gebundenen Wasserstoff enthält, zugetropft. Nach ca. 3 Stunden Rühren bei 110 °C sind 98 % der Si-gebundenen Wasserstoffatome des α,ω-Dihydrogendimethylpolysiloxans umgesetzt. Bei 120 °C und $10^{-3}$ hPa (abs.) werden dann alle flüchtigen Bestandteile destillativ entfernt. Es wird ein klares, gelbliches Öl mit einer Viskosität von 61 $mm^2 \cdot s^{-1}$ bei 25 °C und mit einer Jodzahl (= Zahl, die angibt, wieviel g Jod von 100 g Substanz gebunden werden) von 111 erhalten. Aus dem $^1$H-NMR-Spektrum ist für das Allyloxygruppen aufweisende Dimethylpolysiloxancopolymere ein Verhältnis von Dimethylsiloxaneinheit zu Allyloxygruppe von 1,75 zu entnehmen.

Beispiel 2:

89 g 1,1,2,2-Tetraallyloxyethan werden mit 5,4 mg Platin in Form einer Lösung von Platintetrachlorid in 1-Octen vermischt und die Mischung wird auf 110 °C erwärmt. Zu dieser Mischung werden unter Stickstoffatmosphäre und Rühren bei 110 °C innerhalb von 30 Minuten 581 g eines α,ω-Dihydrogendimethylpolysiloxans mit einer Kettenlänge von 63 zugetropft. Nach ca. 3 Stunden Rühren bei 110 °C sind 98 % der Si-gebundenen Wasserstoffatome des α,ω-Dihydrogendimethylpolysiloxans umgesetzt. Bei 120 °C und $10^{-3}$ hPa werden dann alle flüchtigen Bestandteile destillativ entfernt. Es wird ein Allyloxygruppen aufweisendes Dimethylpolysiloxancopolymeres mit einer Viskosität von 380 $mm^2 \cdot s^{-1}$ bei 25 °C und mit einer Jodzahl von 19,6 erhalten. Aus dem $^1$H-NMR-Spektrum ist für das Siloxancopolymere ein Verhältnis von Dimethylsiloxaneinheit zu Allyloxygruppe von 17 zu entnehmen.

Beispiel 3:

127 g 1,1,2,2-Tetraallyloxyethan werden mit 10,8 mg Platin in Form einer Lösung von Platintetrachlorid in 1-Octen vermischt und die Mischung wird auf 110 °C erwärmt. Zu dieser Mischung werden unter Stickstoffatmosphäre und Rühren bei 110 °C 345 g eines Mischpolymerisats aus Methylhydrogensiloxan-, Dimethylsiloxan- und Trimethylsiloxaneinheiten mit einer Viskosität von 85 $mm^2 \cdot s^{-1}$ bei 25 °C, das 0,058 Gew.-% Si-gebundenen Wasserstoff und durchschnittlich 3,2 Si-gebundene Wasserstoffatome je Molekül enthält, zugetropft. Nach ca. 22 Stunden Rühren bei 110 °C sind 96 % der Si-gebundenen Wasserstoffatome des Mischpolymerisats umgesetzt. Bei 120 °C und $10^{-3}$ hPa (abs.) werden dann alle flüchtigen Bestandteile destillativ entfernt. Nach dem Filtrieren werden 320 g eines klaren, gelben Öls mit einer Viskosität von 387 $mm^2.s^{-1}$ bei 25 °C und mit einer Jodzahl von 24 erhalten. Das so erhaltene Siloxancopolymere ist unvernetzt und in Toluol klar löslich.

Beispiel 4:

48 g Pentaerythrittriallylether (erhältlich bei der Fa. Shell; besitzt eine Jodzahl von 281) werden mit 2,2 mg Platin in Form einer Lösung von Platintetrachlorid in 1-Octen vermischt und die Mischung wird auf 105 °C erwärmt. Zu dieser Mischung werden 435 g eines α,ω-Dihydrogendimethylpolysiloxans mit einer Viskosität von 56 $mm^2 \cdot s^{-1}$ bei 25 °C, das 0,046 Gew.-% Si-gebundenen Wasserstoff enthält, zugetropft. Nach ca. 7 Stunden Rühren sind 98 % der Si-gebundenen Wasserstoffatome des α,ω-Dihydrogendimethylpolysiloxans umgesetzt. Dann werden bei 120 °C und $10^{-3}$ hPa (abs.) die flüchtigen Bestandteile destillativ entfernt. Nach dem Filtrieren werden 380 g einer klaren Flüssigkeit mit einer Viskosität von 810 $mm^2.s^{-1}$ bei 25 °C und mit einer Jodzahl von 11,0 erhalten. Aus dem $^1$H-NMR-Spektrum ist für das Allyloxygruppen aufweisende Siloxancopolymere ein Verhältnis von Dimethylsiloxaneinheit zu Allyloxygruppe von 28,2 zu entnehmen.

Beispiel 5:

40,5 g Tetrakis(1-methyl-2-propenyloxy)silan, hergestellt durch Umesterung von Tetramethoxysilan mit sec.-Butenol, werden mit 27 mg Platin in Form einer Lösung von Platintetrachlorid in 1-Octen vermischt und die Mischung wird auf 105 °C erwärmt. Zu dieser Mischung werden unter Rühren bei 105 °C 291 g eines α,ω-Dihydrogendimethylpolysiloxans mit einer Kettenlänge von 63 zugetropft. Nach ca. 5 Stunden Rühren bei 105 °C sind 95,5 % der Si-gebundenen Wasserstoffatome des α,ω-Dihydrogendimethylpolysiloxans

umgesetzt. Dann werden bei 120 °C und $10^{-3}$ hPa (abs.) die flüchtigen Bestandteile destillativ entfernt. Es werden 254 g eines klaren Produktes mit einer Viskosität von 3860 $mm^2.s^{-1}$ bei 25 °C und mit einer Jodzahl von 15 erhalten. Aus dem $^1H$-NMR-Spektrum ist für das 1-Methyl-2-propenyloxy-Gruppen aufweisende Dimethylpolysiloxancopolymere ein Verhältnis von Dimethylsiloxaneinheit zu 1-Methyl-2-propenyloxygruppe von 55 zu entnehmen.

Beispiel 6:

25,9 g des Produktes aus Beispiel 2 (= 20 mMol Allyloxygruppen) werden mit 34 mg einer 7 %igen Lösung von Platintetrachlorid in 1-Octen vermischt. Zu der Mischung werden 1,2 g eines Mischpolymerisats aus Methylhydrogensiloxan- und Trimethylsiloxaneinheiten mit einer Viskosität von 20 $mm^2 \cdot s^{-1}$ (= 20 mMol Si-gebundenen Wasserstoff) zugegeben. Das Gemisch wird dann auf Papier in einer Dicke von ca.2 $\mu$m aufgestrichen. Es härtet bei 25 °C in weniger als 1 Minute zu einem klebfreien Überzug.

Beispiel 7:

a) 395 g eines technischen Gemisches aus Pentaerythritdi-Pentaerythrittri-und Pentaerythrittetraallylether (entsprechend 2,0 Mol OH-Gruppen) werden mit 250 g Isopropenylacetat und 20 Tropfen konzentrierter $H_2SO_4$ während 4 Stunden unter Rückfluß acyliert. Aceton wird laufend über Kopf abdestilliert, der Rest im Vakuum fraktioniert destilliert. Es werden 412 g eines klaren Produktes mit einer Jodzahl von 250, welches gemäß dem $^1H$-NMR-Spektrum frei von Methylolgruppen ist, erhalten.

b) 67,1 g (entsprechend 0,66 Mol C=C) des acylierten Allylethergemisches, dessen Herstellung oben unter a) beschrieben ist, werden mit 2 mg Platin in Form einer Lösung von Platintetrachlorid in 1-Octen vermischt und die Mischung wird auf 110 °C erwärmt. Zu dieser Mischung werden unter Stickstoffatmosphäre und Rühren bei 110 °C 384,6 g eines $\alpha,\omega$-Dihydrogendimethylpolysiloxans mit einer Kettenlänge von 52 zugetropft. Nach 5 Stunden Rühren bei 110 °C sind 98 % der Si-gebundenen Wasserstoffatome des $\alpha,\omega$-Dihydrogendimethylpolysiloxans umgesetzt. Bei 140 °C und $10^{-3}$ hPa (abs.) werden dann alle flüchtigen Bestandteile destillativ entfernt. Es werden 380 g eines klaren, gelben Siloxancopolymeren mit einer Viskosität von 330 $mm^2.s^{-1}$ erhalten, welches sowohl am Kettenende als auch entlang der Kette Allyloxygruppen enthält (ca. 2120 g des Siloxancopolymeren enthalten 1 Mol Allyloxygruppen).

Beispiel 8:

21,2 g des Produktes aus Beispiel 7 (= 10 mMol Allyloxygruppen) werden mit 75 mg 3-Methyl-1-butin-3-ol, 1,2 g eines Mischpolymerisats aus Methylhydrogensiloxan- und Trimethylsiloxaneinheiten mit einer Viskosität von 20 $mm^2 \cdot s^{-1}$ bei 25 °C (= 20 mMol Si-gebundenen Wasserstoff) und 240 mg einer Lösung aus Platintetrachlorid in Isopropanol, die 1 % Platin, berechnet als Element, enthält, vermischt. Das anwendungsfertige, inhibitorhaltige Gemisch enthält 100 Gew.-ppm Platin, berechnet als Element, und ist bei 25 °C in einem verschlossenen Gefäß über 8 Stunden verarbeitbar. Das Gemisch wird mittels eines Glasstabes auf gestrichenes Kraftpapier in einer Dicke von ca. 2 $\mu$m aufgetragen. Während 5 Sekunden Verweilzeit im Umluftofen bei 80 °C härtet die Beschichtung zu einem klebfreien, kautschukartigen Überzug aus, der keinen "Rub-off" zeigt und abweisend gegenüber mit Acrylatkleber beschichteten Haftetiketten ist.

**Patentansprüche**

**1.** Alkenylgruppen aufweisende Siloxancopolymere enthaltend

(a) Siloxaneinheiten der Formel

$$R_aSi(OR^1)_bO_{\frac{4-(a+b)}{2}} \qquad (I),$$

wobei R gleiche oder verschiedene, gegebenfalls halogenierte Kohlenwasserstoffreste mit 1 bis 18 Kohlenstoffatom(en) je Rest,

$R^1$ gleiche oder verschiedene Alkylreste mit 1 bis 4 Kohlenstoffatom(en) je Rest, die durch ein Ethersauerstoffatom substituiert sein können, bedeutet,

a 0, 1, 2 oder 3,

b 0, 1, 2 oder 3

und die Summe a + b nicht größer als 3 ist,
(b) je Molekül mindestens eine Siloxaneinheit der Formel

$$GR_cSiO_{\frac{4-(c+1)}{2}} \qquad (II)$$

wobei R die oben dafür angegebene Bedeutung hat,
c 0, 1 oder 2 ist,
G einen Rest der Formel

$-CH_2CHR^2CHR^2OY(OCHR^2CR^2=CH_2)_{x-1}$

bedeutet, wobei $R^2$ gleich oder verschieden ist, ein Wasserstoffatom oder einen Methylrest bedeutet,

Y einen dreiwertigen, vierwertigen, fünfwertigen oder sechswertigen Kohlenwasserstoffrest mit 2 bis 20 Kohlenstoffatomen je Rest bedeutet,
der durch Gruppen der Formel
- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl-, oder Phenylrest bedeutet)
-

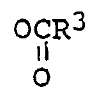

(wobei $R^3$ die oben dafür angegebene Bedeutung hat) oder
- X (wobei X ein Halogenatom bedeutet)

substituiert sein kann
oder durch mindestens ein Sauerstoffatom, Schwefelatom oder eine Carbonylgruppe unterbrochen sein kann,
oder einen dreiwertigen Rest der Formel

$\equiv P$, $\equiv P=O$ oder $\equiv SiR^5$

bedeutet, wobei $R^5$ einen einwertigen Kohlenwasserstoffrest mit 1 bis 8 Kohlenstoffatom(en) je Rest bedeutet,
oder ein vierwertiges Element, wie

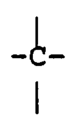, 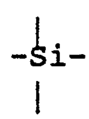 oder 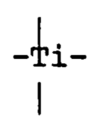

bedeutet und

x 3, 4, 5 oder 6 ist,

und gegebenenfalls
(c) je Molekül mindestens eine Einheit ausgewählt aus der Gruppe von Einheiten der Formel

$$O_{\frac{4-(c+1)}{2}}R_cSi-G^1-SiR_cO_{\frac{4-(c+1)}{2}} \qquad (III),$$

$$\begin{array}{lll} O_{\frac{4-(c+1)}{2}}R_cSi- & G^2 & -SiR_cO_{\frac{4-(c+1)}{2}} \\ & | & \\ & SiR_cO_{\frac{4-(c+1)}{2}} & \end{array} \qquad (IV) \quad \text{und}$$

$$\begin{array}{lll} & SiR_cO_{\frac{4-(c+1)}{2}} & \\ & | & \\ O_{\frac{4-(c+1)}{2}}R_c\ Si- & G^3 & -SiR_cO_{\frac{4-(c+1)}{2}} \\ & | & \\ & SiR_cO_{\frac{4-(c+1)}{2}} & \end{array} \qquad (V),$$

wobei R und c die oben dafür angegebene Bedeutung haben,

$G^1$ einen Rest der Formel

$$\begin{array}{lll} & (OCHR^2CR^2{=}CH_2)_{x-2} & \\ & | & \\ -CH_2CHR^2CHR^2O- & Y & -OCHR^2CHR^2CH_2- \end{array}$$

$G^2$ einen Rest der Formel

$$\begin{array}{lll} & (OCHR^2CR^2{=}CH_2)_{x-3} & \\ & | & \\ -CH_2CHR^2CHR^2O- & Y & -OCHR^2CHR^2CH_2- \\ & | & \\ & OCHR^2CHR^2-CH_2- & \end{array} \qquad \text{und}$$

$G^3$ einen Rest der Formel

$$\begin{array}{lll} & (OCHR^2CR^2{=}CH_2)_{x-4} & \\ & | & \\ -CH_2CHR^2CHR^2O- & Y & -OCHR^2CHR^2CH_2- \\ & | & \\ & (OCHR^2CHR^2CH_2-)_2 & \end{array} \qquad (x-4 \geq 0),$$

wobei $R^2$, Y und x die oben dafür angegebene Bedeutung haben, bedeutet.

2. Alkenylgruppen aufweisende Siloxancopolymere nach Anspruch 1, dadurch gekennzeichnet, daß sie Siloxaneinheiten der Formel (I), je Molekül mindestens eine Siloxaneinheit der Formel (II) und je Molekül mindestens eine Einheit ausgewählt aus der Gruppe der Einheiten der Formel (III), (IV) und (V) enthalten.

3. Alkenylgruppen aufweisende Siloxancopolymere nach Anspruch 1 oder 2, dadurch gekennzeichnet, daß sie enthalten

(a) Siloxaneinheiten der Formel

$R_2SiO$ (I')

(b) je Molekül mindestens zwei Siloxaneinheiten der Formel

$GR_2SiO_{1/2}$ (II') und

(c) je Molekül mindestens eine Einheit der Formel

$O_{1/2}R_2SiG^1SiR_2O_{1/2}$ (III') ,

wobei R gleiche oder verschiedene, gegebenenfalls halogenierte Kohlenwasserstoffreste mit 1 bis 18 Kohlenstoffatom(en) je Rest,

G einen Rest der Formel

$-CH_2CHR^2CHR^2OY(OCHR^2CR^2=CH_2)_{x-1}$

$G^1$ einen Rest der Formel

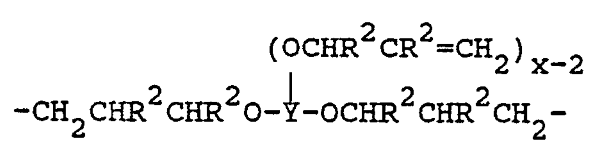

bedeutet, wobei $R^2$ gleich oder verschieden ist, ein Wasserstoffatom oder ein Methylrest bedeutet,
x 3, 4, 5 oder 6 ist und
Y einen dreiwertigen, vierwertigen, fünfwertigen oder sechswertigen Kohlenwasserstoffrest mit 2 bis 20 Kohlenstoffatomen je Rest bedeutet,
der durch Gruppen der Formel

- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)
- 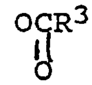

  (wobei $R^3$ die oben dafür angegebene Bedeutung hat) oder
- X (wobei X ein Halogenatom bedeutet)

substituiert sein kann
oder durch mindestens ein Sauerstoffatom, Schwefelatom oder eine Carbonylgruppe unterbrochen sein kann,
oder einen dreiwertigen Rest der Formel

≡P, ≡P = O oder ≡SiR⁵

bedeutet, wobei $R^5$ einen einwertigen Kohlenwasserstoffrest mit 1 bis 8 Kohlenstoffatom(en) je Rest bedeutet,
oder ein vierwertiges Element, wie

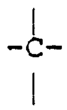, 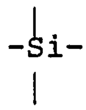 oder 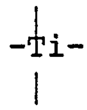

bedeutet.

4. Verfahren zur Herstellung der Alkenylgruppen aufweisenden Siloxancopolymere nach Anspruch 1, 2 oder 3, dadurch gekennzeichnet, daß mehr als zwei aliphatische Doppelbindungen aufweisende organische Verbindung (1) der allgemeinen Formel

$Y(OCHR^2CR^2=CH_2)_x$,

wobei $R^2$ gleich oder verschieden ist, ein Wasserstoffatom oder einen Methylrest bedeutet,

x 3, 4, 5 oder 6 ist und

Y einen dreiwertigen, vierwertigen, fünfwertigen oder sechswertigen Kohlenwasserstoffrest mit 2 bis 20 Kohlenstoffatomen je Rest bedeutet,
der durch Gruppen der Formel
- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)
- 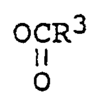
  (wobei $R^3$ die oben dafür angegebene Bedeutung hat) oder
- X (wobei X ein Halogenatom bedeutet)

substituiert sein kann
oder durch mindestens ein Sauerstoffatom, Schwefelatom oder eine Carbonylgruppe unterbrochen sein kann,
oder einen dreiwertigen Rest der Formel

≡P, ≡P = O oder ≡SiR⁵

bedeutet, wobei $R^5$ einen einwertigen Kohlenwasserstoffrest mit 1 bis 8 Kohlenstoffatom(en) je Rest bedeutet,
oder ein vierwertiges Element, wie

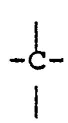, 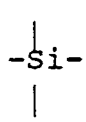 oder 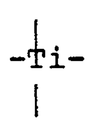

bedeutet,
mit Organopolysiloxan (2) mit mindestens einem Si-gebundenen Wasserstoffatom je Molekül in Gegenwart von die Anlagerung von Si-gebundenen Wasserstoff an aliphatische Doppelbindung förderndem Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Alkenylgruppen aufweisende Siloxancopolymere mit durchschnittlich mehr als zwei Alkenylgruppen der Formel

$-OCHR^2CR^2 = CH_2$ ,

wobei $R^2$ die oben dafür angegebene Bedeutung hat, erhalten werben.

5. Verfahren nach Anspruch 4, dadurch gekennzeichnet, daß als organische Verbindung (1) Tetraallyloxyethan oder solche der Formel

$(R^6OCH_2)_{4-k}C(CH_2OCH_2CH = CH_2)_k$,

wobei $R^6$ Wasserstoff oder einen Rest der Formel

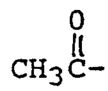

bedeutet und k durchschnittlich 2,5 bis 3,5 ist, verwendet wird.

6. Verfahren nach Anspruch 4, dadurch gekennzeichnet, daß als Organopolysiloxan (2) mit mindestens einem Si-gebundenen Wasserstoffatom je Molekül solches der allgemeinen Formel

$H_dR_{3-d}SiO(SiR_2O)_o(SiRHO)_pSiR_{3-d}H_d$ (VII),

wobei R gleiche oder verschiedene, gegebenenfalls halogenierte Kohlenwasserstoffreste mit 1 bis 18 Kohlenstoffatom(en) je Rest,
d 0 oder 1,
o 0 oder eine ganze Zahl von 1 bis 1000 und
p 0 oder eine ganze Zahl von 1 bis 6 bedeutet,
verwendet wird.

7. Verfahren nach Anspruch 4, 5 oder 6, dadurch gekennzeichnet, daß das so erhaltene Alkenylgruppen aufweisende Siloxancopolymer mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

8. Zusammensetzungen enthaltend
(A) Alkenylgruppen aufweisendes Siloxancopolymer nach Anspruch 1, 2 oder 3
(B) Si-gebundene Wasserstoffatome aufweisendes Organopolysiloxan und
(C) die Anlagerung von Si-gebundenen Wasserstoff an aliphatische Doppelbindung förderndem Katalysator.

9. Verwendung der Zusammensetzungen nach Anspruch 8 zur Herstellung von klebrige Stoffe abweisenden Überzügen.

**Patentansprüche für folgenden Vertragsstaat: Es**

1. Verfahren zur Herstellung von Alkenylgruppen aufweisenden Siloxancopolymeren, dadurch gekennzeichnet, daß mehr als zwei aliphatische Doppelbindungen aufweisende organische Verbindung (1) der allgemeinen Formel

$Y(OCHR^2CR^2=CH_2)_x$,

wobei $R^2$ gleich oder verschieden ist, ein Wasserstoffatom oder einen Methylrest bedeutet,

x 3, 4, 5 oder 6 ist und

Y einen dreiwertigen, vierwertigen, fünfwertigen oder sechswertigen Kohlenwasserstoffrest mit 2 bis 20 Kohlenstoffatomen je Rest bedeutet,
der durch Gruppen der Formel

- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)
-

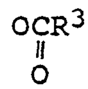

(wobei $R^3$ die oben dafür angegebene Bedeutung hat) oder

- X (wobei X ein Halogenatom bedeutet)

substituiert sein kann
oder durch mindestens ein Sauerstoffatom,
Schwefelatom oder eine Carbonylgruppe unterbrochen sein kann,
oder einen dreiwertigen Rest der Formel

$\equiv P$, $\equiv P=O$ oder $\equiv SiR^5$

bedeutet, wobei $R^5$ einen einwertigen Kohlenwasserstoffrest mit 1 bis 8 Kohlenstoffatom(en) je Rest bedeutet,
oder ein vierwertiges Element, wie

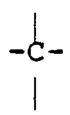, 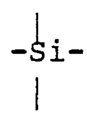 oder 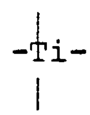

bedeutet,

mit Organopolysiloxan (2) mit mindestens einem Si-gebundenen Wasserstoffatom je Molekül in Gegenwart von die Anlagerung von Si-gebundenen Wasserstoff an aliphatische Doppelbindung förderndem Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Alkenylgruppen aufweisende Siloxancopolymere mit durchschnittlich mehr als zwei Alkenylgruppen der Formel

$-OCHR^2CR^2=CH_2$ ,

wobei $R^2$ die oben dafür angegebene Bedeutung hat, erhalten werden.

**2.** Verfahren nach Anspruch 1, dadurch gekennzeichnet, daß als organische Verbindung (1) Tetraallyloxyethan oder solche der Formel

$(R^6OCH_2)_{4-k}C(CH_2OCH_2CH=CH_2)_k$,

wobei $R^6$ Wasserstoff oder einen Rest der Formel

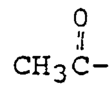

bedeutet und k durchschnittlich 2,5 bis 3,5 ist, verwendet wird.

3. Verfahren nach Anspruch 1, dadurch gekennzeichnet, daß als Organopolysiloxan (2) mit mindestens einem Si-gebundenen Wasserstoffatom je Molekül solches der allgemeinen Formel

$H_dR_{3-d}SiO(SiR_2O)_o(SiRHO)_pSiR_{3-d}H_d$ (VII),

wobei R gleiche oder verschiedene, gegebenenfalls halogenierte Kohlenwasserstoffreste mit 1 bis 18 Kohlenstoffatom(en) je Rest,
d 0 oder 1,
o 0 oder eine ganze Zahl von 1 bis 1000 und
p 0 oder eine ganze Zahl von 1 bis 6 bedeutet,
verwendet wird.

4. Verfahren nach Anspruch 1, 2 oder 3, dadurch gekennzeichnet, daß das so erhaltene Alkenylgruppen aufweisende Siloxancopolymer mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

5. Zusammensetzungen enthaltend
(A) Alkenylgruppen aufweisendes Siloxancopolymer herstellbar nach einem oder mehreren der Ansprüche 1 bis 4,
(B) Si-gebundene Wasserstoffatome aufweisendes Organopolysiloxan und
(C) die Anlagerung von Si-gebundenen Wasserstoff an aliphatische Doppelbindung förderndem Katalysator.

6. Verwendung der Zusammensetzungen nach Anspruch 5 zur Herstellung von klebrige Stoffe abweisenden Überzügen.